# FASCICULE DE BREVET EUROPEEN

(11) **EP 0 754 185 B1**
(45) Date de publication et mention de la délivrance du brevet: **19.11.1997**
(21) Numéro de dépôt: 95916696.8
(22) Date de dépôt: 03.04.1995
(51) Int. Cl.: C07F 7/18

(54) **PROCEDE DE PREPARATION DE LA TRIALCOYLSILYL-7 BACCATINE III**
VERFAHREN ZUR HERSTELLUNG VON 7-TRIALKYLSILYL BACCATIN III
PROCESS FOR PREPARING 7-TRIALKYLSILYL BACCATIN III

(30) Priorité: 05.04.1994 FR 9403979
(43) Date de publication de la demande: 22.01.1997
(73) Titulaire: RHONE-POULENC RORER S.A., 92160 Antony (FR)
(72) Inventeur: BASTART, Jean-Pierre, F-77500 Lesigny (FR); LECONTE, Jean-Pierre, F-91800 Brundy (FR)
(74) Mandataire: Le Pennec, Magali
(86) Numéro de dépôt international: FR9500419
(87) Numéro de publication internationale: WO9526967

(56) Documents cités:
- EP-A- 0 336 840
- J. AM. CHEM. SOC. (JACSAT,00027863);88; VOL.110 (17); PP.5917-19, UNIV. SCI., TECHNOL. MED. GRENOBLE;LEDSS; ST. MARTIN D'HERES; 38402; FR. (FR) Denis J N et al 'Highly efficient, practical approach to natural taxol' cité dans la demande

## Description

La présente invention concerne un nouveau procédé de préparation de la trialcoylsilyl-7 baccatine III de formule générale : 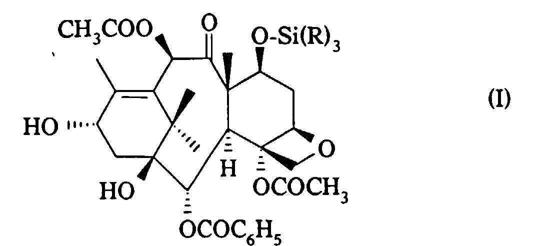 dans laquelle les symboles R, identiques ou différents, représentent des radicaux alcoyles contenant 1 à 4 atomes de carbone éventuellement substitués par un radical phényle à partir de la désacétyl-10 baccatine III de formule :

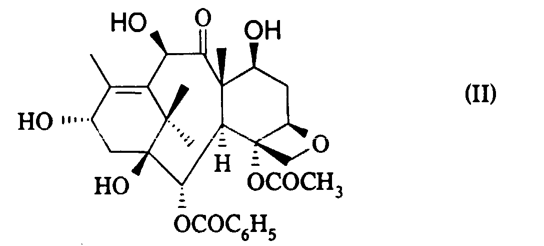

Dans la formule générale (I), chacun des symboles R représente, de préference, un radical alcoyle droit ou ramifié contenant 1 à 4 atomes de carbone. Plus particulièrement encore chacun des symboles R représente un radical éthyle.

Il est connu, en particulier d'après J-N. Denis et A. E. Greene, J. Amer. Chem. Soc., 110, 5917-5919 (1998) de préparer un produit de formule générale (I) à partir de la désacétyl-10 baccatine III de formule (II) en effectuant d'abord la silylation sélective en position -7 du cycle taxane pour obtenir la trialcoylsilyl-7 désacétyl-10 baccatine III, puis en acétylant sélectivement en position -10 la trialcoylsilyl-7 désacétyl-10 baccatine III ainsi obtenue.

Selon le procédé connu, la réaction de silylation est effectuée en traitant la désacétyl-10 baccatine III par un excès d'un halogénure de trialcoylsilyle de formule générale :

Hal-Si(R)₃ (III)

dans laquelle Hal représente un atome d'halogène et R est défini comme précédemment en opérant dans un solvant organique basique tel que la pyridine à une température voisine de 20°C. Généralement, la trialcoylsilyl-7 désacétyl-10 baccatine III est obtenue avec un rendement voisin de 85 %.

Selon le procédé connu, l'acétylation est effectuée en traitant la triéthylsilyl-7 désacéyl-10 baccatine III par un excès de chlorure d'acétyle en opérant dans un solvant organique basique tel que la pyridine à une température voisine de 0°C. Généralement, la trialcoylsilyloxy-7 baccatine III de formule (I) est obtenue avec un rendement de 85 % à partir de la triéthylsilyl-7 baccatine III.

Ainsi, selon le procédé connu, une trialcoylsilyl-7 baccatine III est obtenue avec un rendement voisin de 72 %.

Il a maintenant été trouvé, et c'est ce qui fait l'objet de la présente invention, que le produit de formule générale (I) peut être obtenu avec de meilleurs rendements en effectuant la silylation et l'acétylation sans isolement de la trialcoylsilyl-7 désacétyl-10 baccatine III intermédiaire.

Selon l'invention, la désacétyl-10 baccatine III, en solution dans un solvant organique basique choisi parmi la pyridine et les pyridines substituées par un ou plusieurs radicaux alcoyles contenant 1 à 4 atomes de carbone, est traitée par un agent de silylation de formule générale (III) à une température comprise entre 0 et 15°C, puis par l'anhydride acétique à une température voisine de 20°C.

La mise en oeuvre du procédé selon l'invention nécessite l'emploi d'un excès d'agent silylant beaucoup plus faible que dans le procédé connu. Généralement, on utilise de 1,5 à 2,5 moles d'agent silylant par mole de désacétyl-10 baccatine III mise en oeuvre.

Généralement, on utilise 5 à 7 moles d'anhydride acétique par mole de désacétyl-10 baccatine III mise en oeuvre.

La trialcoylsilyl-7 baccatine III peut être isolée après précipitation dans l'eau et cristallisation, à partir de sa solution dans un ester aliphatique tel que l'acétate d'éthyle, au moyen d'un éther tel que l'oxyde d'isopropyle. Généralement, le rendement est voisin de 80 % à partir de la désacétyl-10 baccatine III mise en oeuvre.

La trialcoylsilyl-7 baccatine III, obtenue selon le procédé de la présente invention, peut être utilisée, après isolement ou en solution dans un ester aliphatique tel que l'acétate d'éthyle, pour préparer le paclitaxel ou ses dérivés selon des procédés connus tels que décrits par exemple dans le brevet européen EP-0 336 840 ou dans la demande internationale WO 92/09589.

L'exemple suivant illustre la mise en oeuvre du procédé selon l'invention.

### EXEMPLE

A une solution de 293,9 g de désacétyl-10 baccatine III dans 2,7 litres de pyridine, on ajoute, en 1 heure 20 minutes, 182 g de chlorure de triéthylsilyle. La solution obtenue est agitée pendant 40 heures à 5°C. On ajoute alors 360 g d'anhydride acétique en maintenant la température à 5°C. La suspension obtenue est agitée pendant 48 heures à 20°C puis versée sur 40 litres d'eau glacée. Le précipité obtenu est séparé par filtration puis lavé par 8 fois 2 litres d'eau et enfin dissous dans 3 litres d'acétate d'éthyle. La phase organique est séchée sur sulfate de magnésium. Après filtration et concentration sous pression réduite, le produit obtenu est cristallisé dans l'oxyde d'isopropyle. On obtient ainsi, avec un rendement de 77 %, la triéthylsilyl-7 baccatine III dont les caractéristiques sont les suivantes :
- point de fusion : 254°C
- spectre de résonance magnétique nucléaire du proton : (400 MHz ; CDCl₃, δ en ppm) : 0,58 (mt, 6H : CH₂ éthyl) ; 0,92 (t, J = 7,5 Hz, 9H : CH₃ éthyl) ; 1,02 (s, 3H: CH₃) ; 1,18 (s, 3H: CH₃) ; 1,68 (s, 3H: CH₃) ; 1,75 (s large, 1H : OH en 1) ; 1,87 et 2,53 (2 mt, 1H chacun : CH₂ en 6); 2,18 (s, 6H : CH₃ et COCH₃) ; 2,27 (mt, 2H : CH₂ en 14) ; 2,28 (s, 3H : COCH₃) ; 2,47 (s large, 1H : OH en 13) ; 3,88 (d, J = 7 Hz, 1H : H 3) ; 4,13 et 4,30 (2d, J = 8,5 Hz, 1H chacun : CH₂ en 20) ; 4,50 (dd, J = 11 et 7Hz, 1H : H en 7) ; 4,81 (mt, 1H : H en 13) ; 4,95 (d large, J = 10 Hz, 1H : H en 5) ; 5,63 (d, J = 7 Hz, 1H : H 2) ; 6,46 (s, 1H: H en 10) ; 7,46 (t, J = 8,5 Hz, 2H : -OCOC₆H₅ H en méta) ; 7,60 (t, J = 8,5 Hz, 1H : -OCOC₆H₅ H en para) ; 8,10 (d, J = 8,5 Hz, 2H : -OCOC₆H₅ H en ortho).

## Revendications

1. Procédé de préparation de la trialcoylsilyl-7 baccatine III de formule générale : 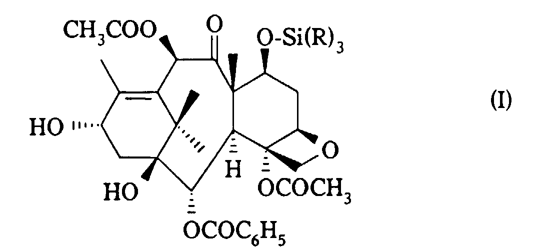 dans laquelle les symboles R, identiques ou différents, représentent des radicaux alcoyles droits ou ramifiés contenant 1 à 4 atomes de carbone éventuellement substitués par un radical phényle caractérisé en ce que l'on traite la désacétyl-10 baccatine III de formule : 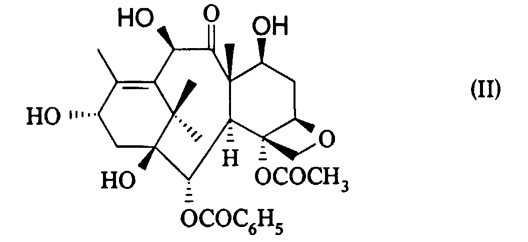 par un agent de silylation de formule générale :
Hal-Si(R)₃ (III)
dans laquelle R est défini comme précédemment, puis par l'anhydride acétique sans isoler la trialcoylsilyl-7 désacétyl-10 baccatine III intermédiaire.

2. Procédé selon la revendication 1 caractérisé en ce que l'on opère dans un solvant organique basique.

3. Procédé selon la revendication 2 caractérisé en ce que le solvant organique basique est choisi parmi la pyridine et les pyridines substituées par un ou plusieurs radicaux alcoyles contenant 1 à 4 atomes de carbone.

4. Procédé selon la revendication 2 caractérisé en ce que le solvant organique basique est la pyridine.

5. Procédé selon l'une des revendications 1 ou 2 caractérisé en ce que l'on utilise de 1,5 à 2,5 moles d'agent silylant par mole de désacétyl-10 baccatine III mise en oeuvre.

6. Procédé selon l'une des revendications 1 ou 2 caractérisé en ce que l'on utilise de 5 à 7 moles d'anhydride acétique par mole de désacétyl-10 baccatine III mise en oeuvre.

7. procédé selon l'une des revendications 1 ou 2 caractérisé en ce que le traitement par l'agent de silylation est effectué à une température comprise entre 0 et 15°C.

8. Procédé selon l'une des revendications 1 ou 2 caractérisé en ce que le traitement par l'anhydride acétique est effectué à une température voisine de 20°C.

9. Procédé selon l'une des revendications 1 à 8 pour la préparation d'une trialcoylsilyle-7 baccatine III de formule générale (I) dans laquelle chacun des symboles R représente un radical alcoyle contenant 1 à 3 atomes de carbone.

10. Procédé selon l'une des revendications 1 à 8 pour la préparation d'une trialcoylsilyle-7 baccatine III de formule générale (I) dans laquelle chacun des symboles R représente un radical éthyle.

## Patentansprüche

1. Verfahren zur Herstellung von 7-Trialkylsilyl-Baccatin III der allgemeinen Formel (I) 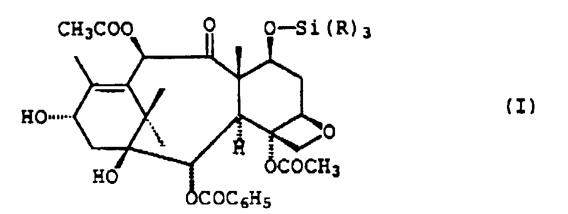 in der die Symbole R, gleich oder verschieden, gerade oder verzweigte Reste Alkyl mit 1 bis 4 Kohlenstoffatomen darstellen, gegebenenfalls substituiert durch einen Rest Phenyl, dadurch gekennzeichnet, daß man 10-Desacetyl-Baccatin III der Formel (II) 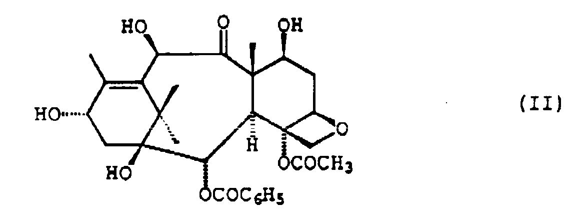 mit einem Silylierungsmittel der allgemeinen Formel (III)
Hal-Si(R)₃ (III)
in der R wie oben definiert ist, und anschließend mit Essigsäureanhydrid behandelt, ohne das Zwischenprodukt 7-Trialkylsilyl-10-desacetyl-Baccatin III zu isolieren.

2. Verfahren nach Anspruch 1, dadurch gekennzeichnet, daß man in einem basischen organischen Lösungsmittel arbeitet.

3. Verfahren nach Anspruch 2, dadurch gekennzeichnet, daß das basische organische Lösungsmittel unter Pyridin und den durch einen oder mehrere Reste Alkyl mit 1 bis 4 Kohlenstoffatomen substituierten Pyridinen ausgewählt wird.

4. Verfahren nach Anspruch 2, dadurch gekennzeichnet, daß das basische organische Lösungsmittel Pyridin ist.

5. Verfahren nach einem der Ansprüche 1 oder 2, dadurch gekennzeichnet, daß man 1,5 bis 2,5 Mol Silylierungsmittel pro Mol eingesetztem 10-Desacetyl-Baccatin III verwendet.

6. Verfahren nach einem der Ansprüche 1 oder 2, dadurch gekennzeichnet, daß man 5 bis 7 Mol Essigsäureanhydrid pro Mol eingesetztem 10-Desacetyl-Baccatin III verwendet.

7. Verfahren nach einem der Ansprüche 1 oder 2, dadurch gekennzeichnet, daß die Behandlung mit dem Silylierungsmittel bei einer Temperatur zwischen 0 °C und 15 °C durchgeführt wird.

8. Verfahren nach einem der Ansprüche 1 oder 2, dadurch gekennzeichnet, daß die Behandlung mit dem Essigsäureanhydrid bei einer Temperatur von etwa 20 °C durchgeführt wird.

9. Verfahren nach einem der Ansprüche 1 bis 8 zur Herstellung eines 7-Trialkylsilyl-Baccatin III der allgemeinen Formel (I), in der jedes der Symbole R einen Rest Alkyl mit 1 bis 3 Kohlenstoffatomen darstellt.

10. Verfahren nach einem der Ansprüche 1 bis 8 zur Herstellung eines 7-Trialkylsilyl-Baccatin III der allgemeinen Formel (I), in der jedes der Symbole R einen Rest Ethyl darstellt.

## Claims

1. Process for the preparation of 7-trialkylsilylbaccatin III of general formula: 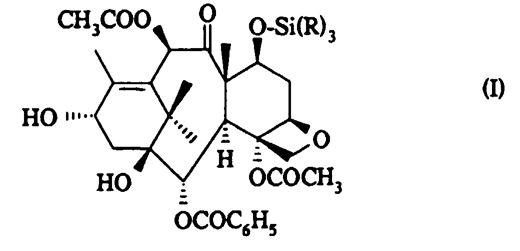 in which the symbols R, which may be identical or different, represent straight or branched alkyl radicals containing 1 to 4 carbon atoms which are optionally substituted with a phenyl radical, characterized in that 10-deacetylbaccatin III of formula: 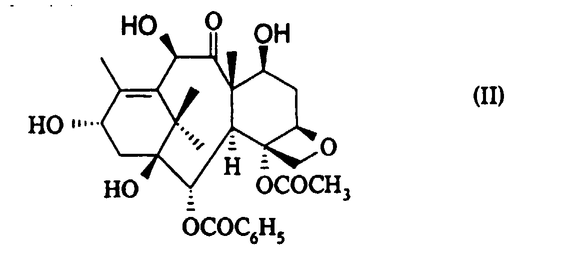 is treated with a silylating agent of general formula:
Hal-Si(R)₃ (III)
in which R is defined as above, then with acetic anhydride without isolating the intermediate 7-trialkylsilyl-10-deacetylbaccatin III.

2. Process according to claim 1, characterized in that the process is performed in a basic organic solvent.

3. Process according to claim 2, characterized in that the basic organic solvent is chosen from pyridine and pyridines substituted with one or more alkyl radicals containing 1 to 4 carbon atoms.

4. Process according to claim 2, characterized in that the basic organic solvent is pyridine.

5. Process according to either of claims 1 and 2, characterized in that from 1.5 to 2.5 mol of silylating agent are used per mole of 10-deacetylbaccatin III used.

6. Process according to either of claims 1 and 2, characterized in that from 5 to 7 mol of acetic anhydride are used per mole of 10-deacetylbaccatin III used.

7. Process according to either of claims 1 and 2, characterized in that the treatment with the silylating agent is carried out at a temperature between 0 and 15°C.

8. Process according to either of claims 1 and 2, characterized in that the treatment with acetic anhydride is carried out at a temperature in the region of 20°C.

9. Process according to one of claims 1 to 8 for the preparation of a 7-trialkylsilylbaccatin III of general formula (I) in which each of the symbols R represents an alkyl radical containing 1 to 3 carbon atoms.

10. Process according to one of claims 1 to 8 for the preparation of a 7-trialkylsilylbaccatin III of general formula (I) in which each of the symbols R represents an ethyl radical.
